# EUROPÄISCHE PATENTSCHRIFT

(11) **EP 1 930 119 B1**
(45) Veröffentlichungstag und Bekanntmachung des Hinweises auf die Patenterteilung: **20.08.2014**
(21) Anmeldenummer: 06025398.6
(22) Anmeldetag: 08.12.2006
(51) Int. Cl.: B23Q 7/10, B21D 43/20, B65G 1/04

(54) **Maschinelle Anlage zum Bearbeiten von Werkstücken**
Mechanical installation for processing workpieces
Installation mécanique pour le traitement de pièces

(43) Veröffentlichungstag der Anmeldung: 11.06.2008
(73) Patentinhaber: Trumpf Sachsen GmbH, 01904 Neukirch (DE)
(72) Erfinder: Kilian, Friedrich, 71229 Leonberg (DE); Thonig, Harry, 01904 Neukirch (DE); Poike, Thomas, 01904 Neukirch (DE)
(74) Vertreter: Kohler Schmid Möbus

(56) Entgegenhaltungen:
- DE-A1- 3 810 657
- DE-A1- 10 017 935
- FR-A- 2 617 145
- FR-A1- 2 582 242
- "AS/RS SERVE AS SPINES OF EUROPEAN FFS" TOOLING AND PRODUCTION, HUEBER PUBLICATION INC. SOLON, US, Bd. 55, Nr. 1, 1. April 1990 (1990-04-01), Seite 18, XP000101711 ISSN: 0040-9243
- ANDRA B W: "FLEXIBLES FERTIGUNGSSYSTEM FUR BLECHWERKSTUCKE" WERKSTATT UND BETRIEB, CARL HANSER VERLAG, MUNCHEN, DE, Bd. 122, Nr. 1, Januar 1989 (1989-01), Seiten 79-84, XP000002920 ISSN: 0043-2792

## Beschreibung

Die Erfindung betrifft eine maschinelle Anlage zum Bearbeiten von Werkstücken, insbesondere von Blechen,
- mit einer Lagerseite, die ein Werkstücklager mit einer Mehrzahl von Lagereinheiten umfasst,
- mit einer Bearbeitungsseite, die eine Mehrzahl von maschinellen Bearbeitungseinheiten aufweist sowie
- mit einer maschinellen Beschickungseinrichtung, die zwischen der Lagerseite und der Bearbeitungsseite vorgesehen ist und die eine Mehrzahl von Beschickungseinheiten umfasst, mittels derer Werkstücke lagerseitig aufnehmbar und bearbeitungsseitig abgebbar und/oder bearbeitungsseitig aufnehmbar und lagerseitig abgebbar sind,
- wobei Anlagenmodule ausgebildet sind, von denen jedes zumindest eine Lagereinheit des Werkstücklagers, zumindest eine Bearbeitungseinheit der Bearbeitungsseite und dazwischen zumindest eine Beschickungseinheit der Beschickungseinrichtung umfasst, wobei die zumindest eine Lagereinheit, die zumindest eine Bearbeitungseinheit und die zumindest eine Beschickungseinheit eines Anlagenmoduls einander zugeordnet sind.

Solch eine Anlage ist z.B. in der FR-A-2582242 offenbart.

Eine Anlage zum Bearbeiten von Blechen ist offenbart in US 2003/0091423 A1. Im Falle des Standes der Technik ist ein Lagerregal vorgesehen, in welchem die zu bearbeitenden Bleche eingelagert sind. Die Werkstückbearbeitung erfolgt mittels Bearbeitungsmaschinen, insbesondere mittels Laserschneidmaschinen, die in Richtung der Bewegung einer Beschickungseinrichtung hintereinander angeordnet sind. Von der Beschickungseinrichtung werden sämtliche Bearbeitungsmaschinen der vorbekannten Anlage bedient. Zu bearbeitende Bleche werden mittels der Beschickungseinrichtung aus dem Lagerregal entnommen, anschließend zu der betreffenden Bearbeitungsmaschine transportiert und schließlich an diese übergeben.

Weiterer Stand der Technik ist bekannt aus DE 100 17 935 A1. Die in dieser Druckschrift offenbarte maschinelle Anlage weist eine Lagerseite mit einem Rundmagazin auf, das als Lagereinheiten eine Mehrzahl von Halterungen umfasst. Auf der Bearbeitungsseite der vorbekannten Anlage sind mehrere Bearbeitungsmaschinen angeordnet. Zwischen den Bearbeitungsmaschinen und dem Rundmagazin ist jeweils eine Beschickungseinheit in Form eines Greifers vorgesehen. Unterschiedlichen Bearbeitungsmaschinen ist ein und dieselbe Halterung zugeordnet. Zu diesem Zweck wird das mit den Halterungen versehene Rundmagazin um eine Magazinachse gedreht.

Gattungsgemäßer Stand der Technik ist offenbart in FR 2 582 242 A1, Diese Druckschrift betrifft eine maschinelle Anlage zum Bearbeiten von Werkstücken, die eine Mehrzahl von Anlagenmodulen aufweist. Jedes Anlagenmodul umfasst zumindest eine Lagereinheit eines Behälterlagers, eine Bearbeitungseinheit und eine zwischen der wenigstens einen Lagereinheit des Behälterlagers und der zugehörigen Bearbeitungseinheit angeordnete Beschickungseinheit. Eine Transfereinrichtung ist zwischen dem Behälterlager und den Beschickungseinheiten der Anlagenmodule vorgesehen. Ein Werkstücktransfer mittels der Transfervorrichtung erfolgt zwischen dem Behälterlager der vorbekannten Anordnung und Lagereinrichtungen der Beschickungseinheiten der verschiedenen Anlagenmodule.

Aufgabe der vorliegenden Erfindung ist es, eine maschinelle Anlage zum Bearbeiten von Werkstücken bereitzustellen, deren Leistungsfähigkeit gegenüber dem gattungsbildenden Stand der Technik erhöht ist.

Erfindungsgemäß gelöst wird diese Aufgabe durch die maschinelle Anlage nach Patentanspruch 1.

In Richtung des Materialflusses gesehen sind zwischen der Lagerseite und der Bearbeitungsseite der Anlage nach Patentanspruch 1 mehrere Beschickungseinheiten vorgesehen, die jeweils unterschiedlichen Bearbeitungseinheiten der Bearbeitungsseite zugeordnet sind. Einzelne Bearbeitungseinheiten lassen sich folglich unabhängig voneinander betreiben. Beispielsweise können mehrere Bearbeitungseinheiten gleichzeitig mit zu bearbeitenden Werkstücken beschickt werden. Zusätzlich oder alternativ besteht die Möglichkeit, bearbeitete Werkstücke gleichzeitig von mehreren Bearbeitungseinheiten abzuziehen und lagerseitig zu übergeben. Es lassen sich hohe Werkstückdurchsätze realisieren. Insbesondere realisierbar ist eine Mehrmaschinenbedienung mit hoher Geschwindigkeit.

Jedes Anlagenmodul der modular aufgebauten Anlage gemäß Patentanspruch 1 umfasst auf der Lagerseite zumindest eine Lagereinheit, auf der Bearbeitungsseite zumindest eine Bearbeitungseinheit und dazwischen eine Beschickungseinheit. Aufgrund des modularen Konzeptes können derartige Anlagen auf einfache Art und Weise an die Bedürfnisse des jeweiligen Anlagenbetreibers angepasst werden. Flexibel gestalten lassen sich insbesondere der mengenmäßige Werkstückdurchsatz der Anlage sowie die mit der Anlage realisierbaren Bearbeitungsarten.

Die erfindungsgemäße Transfereinrichtung verbindet unterschiedlichen Bearbeitungseinheiten zugeordnete Beschickungseinheiten und/oder unterschiedlichen Bearbeitungseinheiten zugeordnete Lagereinheiten miteinander. Eine derartige Transfereinrichtung kann dazu genutzt werden, zu bearbeitende Werkstücke auf unterschiedliche Bearbeitungseinheiten zu verteilen. Zusätzlich oder alternativ gestattet die erfindungsgemäße Transfereinrichtung, die Transportwege von bearbeiteten Werkstücken, die von unterschiedlichen Bearbeitungseinheiten stammen, zusammenzuführen. Einer Bearbeitungseinheit zuzuführende Werkstücke lassen sich von der Transfereinrichtung unmittelbar an die Beschickungseinheit übergeben, welche der Bearbeitungseinheit zugeordnet ist. Die Werkstückübergabe kann aber auch an eine der Bearbeitungseinheit zugeordnete Lagereinheit erfolgen, aus welcher die Werkstücke dann von der betreffenden Beschickungseinheit entnommen werden. Entsprechend können bearbeitete Werkstücke von der Beschickungseinheit der betreffenden Bearbeitungseinheit unmittelbar oder über die zugeordnete Lagereinheit zu der Transfereinrichtung gelangen. In jedem Fall bietet die erfindungsgemäße Transfereinrichtung eine Möglichkeit, die einzelnen Bearbeitungseinheiten miteinander koordiniert zu betreiben. Da die Transfereinrichtung innerhalb der Grundfläche der den Anlagenmodulen zugehörigen Lagereinheiten des Werkstücklagers untergebracht ist, ergibt sich eine platzsparende Bauweise der Gesamtanordnung.

Besondere Ausführungsarten der Erfindung nach Patentanspruch 1 ergeben sich aus den abhängigen Patentansprüchen 2 bis 7.

Von besonderem Vorteil für den betrieblichen Einsatz erfindungsgemäßer Anlagen ist es, wenn - wie ausweislich Patentanspruch 2 vorgesehen - Werkstücke mittels der Transfereinrichtung zwischen unterschiedlichen Bearbeitungseinheiten zugeordneten Beschickungseinheiten und/oder zwischen unterschiedlichen Bearbeitungseinheiten zugeordneten Lagereinheiten transferierbar sind. In diesem Fall kann die Transfereinrichtung insbesondere einen Teil der für eine Mehrfachbearbeitung von Werkstücken erforderlichen Werkstückbewegung übernehmen.

Bevorzugte Möglichkeiten zur konstruktiven Realisierung des erfindungsgemäßen Konzeptes sind aus den Patentansprüchen 3 bis 7 ersichtlich.

Gemäß Patentanspruch 3 ist das Werkstücklager als Regallager, gegebenenfalls mit Lagereinheiten in Form von Regaleinheiten, ausgebildet.

Als Beschickungseinheiten sind vorzugsweise Regalbediengeräte vorgesehen (Patentanspruch 4).

Die erfindungsgemäße Transfereinrichtung kann wenigstens eine Transfereinheit umfassen, die mit einer Transferbewegung bewegbar ist (Patentanspruch 5) und dabei vorzugsweise an dem Werkstücklager, gegebenenfalls an dem Regallager, geführt wird (Patentanspruch 6).

Die auf der Lagerseite der erfindungsgemäßen Anlage eingelagerten bzw. zwischengelagerten Werkstücke sind vorzugsweise auf Paletten abgelegt. Das Werkstücklager der erfindungsgemäßen Anlage ist daher insbesondere als Palettenlager ausgebildet (Patentanspruch 7).

Nachstehend wird die Erfindung anhand beispielhafter schematischer Darstellungen näher erläutert. Es zeigen:
- Figur 1:: eine maschinelle Anlage erster Bauart zum Bearbeiten von Blechen in stark schematisierter Draufsicht,
- Figur 2:: den strichpunktiert begrenzten Teil T1 der maschinellen Anlage gemäß Figur 1 in stark schematisierter Ansicht in Richtung des Pfeils II in Figur 1,
- Figur 3:: den gestrichelt begrenzten Teil T2 der maschinellen Anlage gemäß Figur 1 mit konstruktiven Details in der Ansicht in Richtung des Pfeils III in Figur 1,
- Figur 4:: eine Teildarstellung der Anordnung gemäß Figur 3 in der Ansicht in Richtung des Pfeils IV in Figur 3,
- Figur 5:: ein Detail von Figur 4 in vergrößerter Darstellung und
- Figur 6:: eine Darstellung entsprechend Figur 1 zu einer maschinellen Anlage zweiter Bauart zum Bearbeiten von Blechen.

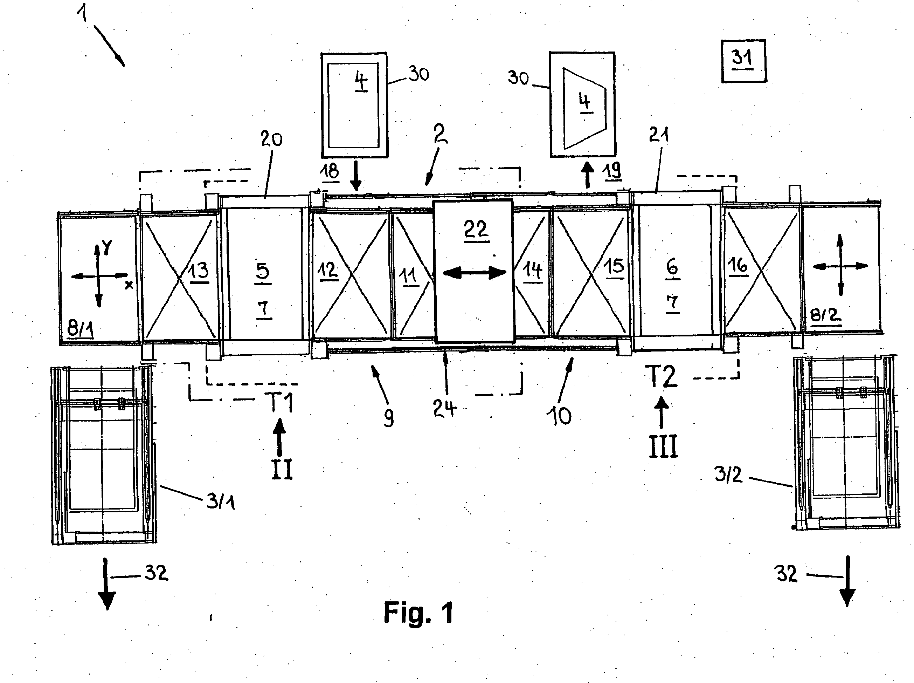

Gemäß Figur 1 umfasst eine maschinelle Anlage 1 zum Bearbeiten von Werkstücken, ein Werkstücklager 2 sowie Bearbeitungseinheiten in Form einer ersten Bearbeitungsmaschine 3/1 sowie einer zweiten Bearbeitungsmaschine 3/2. In dem dargestellten Beispielsfall dient die maschinelle Anlage 1 zum schneidenden Bearbeiten von Blechen 4.

In Richtung des Materialflusses zwischen dem Werkstücklager 2 und der ersten Bearbeitungsmaschine 3/1 ist eine erste Beschickungseinheit 5 der maschinellen Anlage 1 vorgesehen. Entsprechend weist die maschinelle Anlage 1 zwischen dem Werkstücklager 2 und der zweiten Bearbeitungsmaschine 3/2 eine zweite Beschickungseinheit 6 auf. Die Beschickungseinheiten 5, 6 sind Teil einer Beschickungseinrichtung 7.

Weitere Komponenten der maschinellen Anlage 1 sind ein erster Werkstückwechsler 8/1 zwischen der ersten Beschickungseinheit 5 und der ersten Bearbeitungsmaschine 3/1 sowie ein zweiter Werkstückwechsler 8/2 zwischen der zweiten Beschickungseinheit 6 und der zweiten Bearbeitungsmaschine 3/2.

Bei den Bearbeitungsmaschinen 3/1, 3/2 handelt es sich um Laserflachbettmaschinen herkömmlicher Bauart zur schneidenden Blechbearbeitung. Gleichfalls üblicher Bauart sind der erste Werkstückwechsler 8/1 sowie der zweite Werkstückwechsler 8/2. Beide Werkstückwechsler 8/1, 8/2 umfassen eine Werkstückauflage, auf welcher das betreffende Blech 4 auch während seiner Bearbeitung verbleibt. Sowohl der erste Werkstückwechsler 8/1 als auch der zweite Werkstückwechsler 8/2 ist in zwei senkrecht zueinander verlaufenden Bewegungsrichtungen x und y verfahrbar.

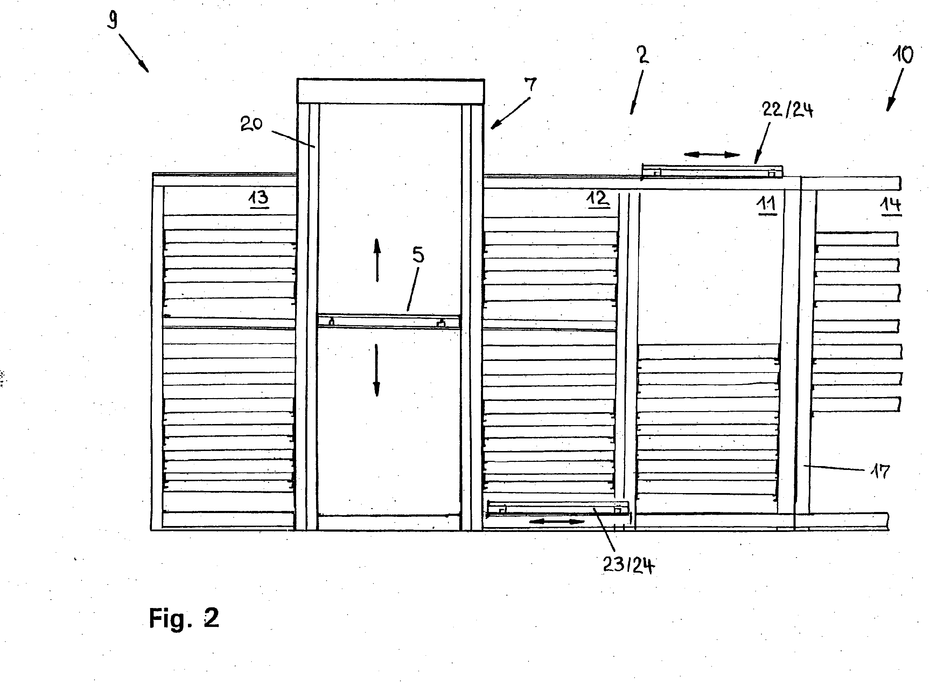

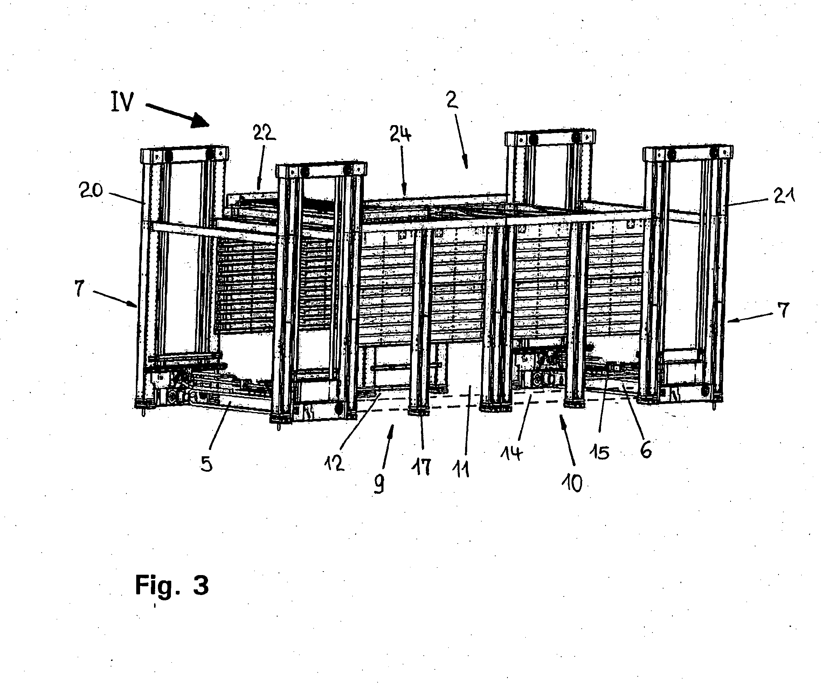

Wie insbesondere aus den Figuren 2 und 3 hervorgeht, ist das Werkstücklager 2 als Regallager ausgeführt. Es setzt sich zusammen aus einer ersten als Regaleinheit ausgebildeten Lagereinheit 9 sowie aus einer entsprechenden zweiten Lagereinheit 10 (Figur 1). Die erste Lagereinheit 9 wiederum umfasst Lagerregale 11, 12, 13, die zweite Lagereinheit 10 Lagerregale 14, 15, 16. Jedes der Lagerregale 11, 12, 13, 14, 15, 16 verfügt in gewohnter Weise über eine Mehrzahl von Palettenlagerplätzen, die an einem Gestell 17 des Werkstücklagers 2 in vertikaler Richtung übereinander angeordnet sind. Ein Werkstückeingang 18 des Werkstücklagers 2 ist an dem Lagerregal 12 der ersten Lagereinheit 9 vorgesehen; ein Werkstückausgang 19 des Werkstücklagers 2 befindet sich an dem Lagerregal 15 der zweiten Lagereinheit 10 (Figur 1).

Herkömmliche, motorisch angetriebene Regalbediengeräte bilden die erste Beschickungseinheit 5 sowie die zweite Beschickungseinheit 6. Die erste Beschickungseinheit 5 ist an einer Tragstruktur 20 der Beschickungseinheit 7, die zweite Beschickungseinheit 6 an einer Tragstruktur 21 der Beschickungseinheit 7 in vertikaler Richtung verfahrbar. Beide Tragstrukturen 20, 21 sind in das Werkstücklager 2 integriert. Dabei befindet sich die Tragstruktur 20 mit der ersten Beschickungseinheit 5 zwischen den Lagerregalen 12, 13 der ersten Lagereinheit 9. Die Tragstruktur 21 mit der zweiten Beschickungseinheit 6 ist zwischen den Lagerregalen 15, 16 der zweiten Lagereinheit 10 installiert.

Einander zugeordnet sind einerseits die Lagereinheit 9, die Beschickungseinheit 5, der Werkstückwechsler 8/1 sowie die Bearbeitungsmaschine 3/1, andererseits die Lagereinheit 10, die Beschickungseinheit 6, der Werkstückwechsler 8/2 sowie die Bearbeitungsmaschine 3/2. Insoweit ist die maschinelle Anlage 1 symmetrisch aufgebaut. Die einander zugeordneten Anlagenkomponenten bilden jeweils ein Anlagenmodul.

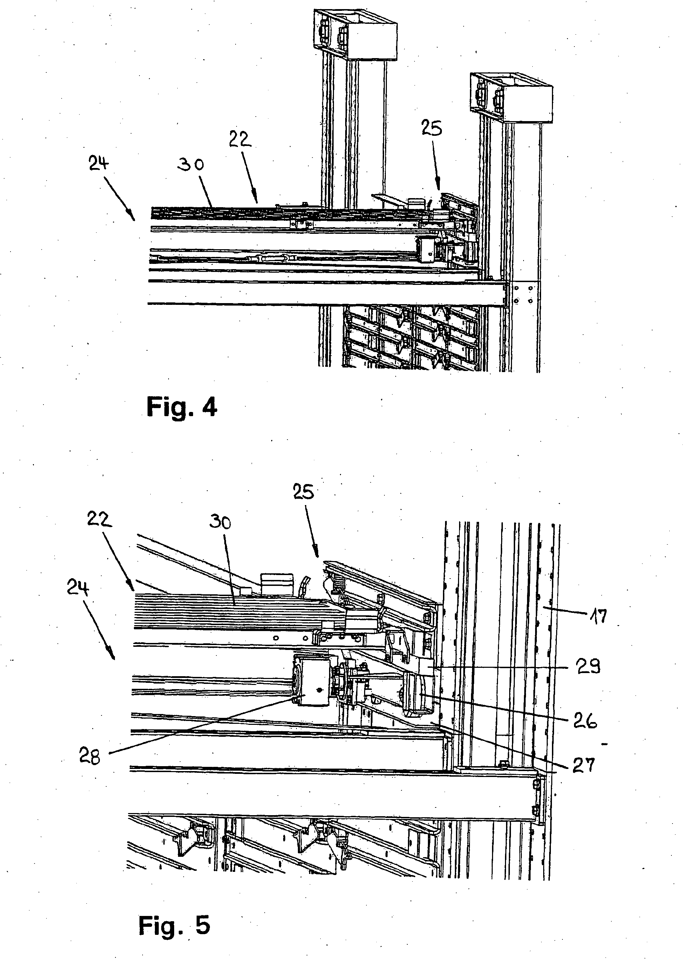

In horizontaler Richtung sind an dem Gestell 17 des Werkstücklagers 2 eine obere Transfereinheit 22 sowie eine untere Transfereinheit 23 einer Transfereinrichtung 24 motorisch angetrieben verfahrbar. Die Transfereinrichtung 24 stellt eine Verbindung zwischen den beiden Modulen der maschinellen Anlage 1 her. Einzelheiten der oberen Transfereinheit 22 sind in den Figuren 4 und 5 erkennbar. Die untere Transfereinheit 23 ist in Figur 2 angedeutet und in Figur 3 der Einfachheit halber nicht gezeigt. Sie ist mit der oberen Transfereinheit 22 baugleich.

Werden die Lagerregale 11, 12, 13, 14, 15, 16 zur Kapazitätserweiterung der maschinellen Anlage 1 aufgestockt, so kann die Transfereinheit 22 bei Bedarf in ihrer ursprünglichen Einbauposition verbleiben und dann auf einfache Art und Weise mit den zusätzlichen Regalfächern überbaut werden. In dem erweiterten Werkstücklager 2 liegt die Transfereinheit 22 in diesem Fall auf einer Zwischenebene des Regallagers.

Beide Transfereinheiten 22, 23 umfassen jeweils einen Transferwagen 25, der sich mit Laufrollen 26 auf Laufschienen 27 der Transfereinrichtung 24 bewegt. Die Laufschienen 27 der Transfereinrichtung 24 sind mit dem Gestell 17 des Werkstücklagers 2 verschraubt. Zum Antrieb des Transferwagens 25 dient ein mitfahrender elektrischer Antrieb 28, der an einem Tragrahmen 29 des Transferwagens 25 angeflanscht ist. Andere Antriebsarten, insbesondere ein pneumatischer oder ein hydraulischer Antrieb, sind denkbar.

Der Tragrahmen 29 des Transferwagens 25 lagert eine Palette 30, auf welcher ein oder mehrere Bleche 4 abgelegt werden können. Die Palette 30 lässt sich in horizontaler Richtung auf den Tragrahmen 29 des Transferwagens 25 aufschieben oder von dem Tragrahmen 29 herunterziehen. In beiden Fällen ist die Palette 30 an dem Tragrahmen 29 mittels herkömmlicher Längsführungen geführt. In der auf den Transferwagen 25 aufgeschobenen Position ist die Palette 30 gesichert. Diese Sicherung wird beim Aufbringen der Palette 30 auf den Transferwagen 25 selbsttätig hergestellt und ist vor dem Abziehen der Palette 30 von dem Transferwagen 25 zu lösen.

Alle wesentlichen Funktionen der maschinellen Anlage 1 sind numerisch gesteuert. Eine zu diesem Zweck vorgesehene programmierbare Computersteuerung 31 ist in Figur 1 angedeutet.

Im Betrieb werden der maschinellen Anlage 1 zu bearbeitende Bleche von außen zugeführt. Zu diesem Zweck werden Paletten 30 mit darauf gestapelten Blechen 4 über den Werkstückeingang 18 in das Werkstücklager 2 aufgegeben. Eine mit zu bearbeitenden Werkstücken beladene Palette 30 ist in Figur 1 nahe dem Werkstückeingang 18 angedeutet.

Über den Werkstückeingang 18 gelangt die beladene Palette 30 zu dem in Richtung des Materialflusses unmittelbar auf den Werkstückeingang 18 folgenden Palettenlagerplatz des Lagerregales 12. Von dort wird die beladene Palette 30 durch die erste Beschickungseinheit 5 der Beschickungseinrichtung 7 entnommen. Das weitere Handling der Palette 30 lässt sich flexibel gestalten.

Zum einen besteht die Möglichkeit, die Palette 30 mit sämtlichen darauf abgelegten Blechen 4 mittels der ersten Beschickungseinheit 5 an einem der Lagerregale 11, 12, 13 der ersten Lagereinheit 9 abseits des auf den Werkstückeingang 18 unmittelbar folgenden Palettenlagerplatzes einzulagern. An dem neuen Palettenlagerplatz kann die beladene Palette 30 verbleiben, bis auf ihr abgelegte Bleche 4 zur Bearbeitung einer der Bearbeitungsmaschinen 3/1, 3/2 zuzuführen sind.

Zum andern kann an der von der ersten Beschickungseinheit 5 übernommenen Palette 30 mittels einer nicht im Einzelnen gezeigten Vorrichtung das im Stapel zuoberst liegende Blech 4 abgenommen und an den Werkstückwechsler 8/1 übergeben werden. Zu diesem Zweck ist der Werkstückwechsler 8/1 in x-Richtung in eine Beladeposition zu verfahren, in welcher er unterhalb des untersten Palettenlagerplatzes des Lagerregales 13 angeordnet ist. Mit den verbliebenen Blechen 4 kann die Palette 30 von der Beschickungseinheit 5 an einem der Palettenlagerplätze der ersten Lagereinheit 9 eingelagert werden. Der erste Werkstückwechsler 8/1 verfährt mit dem darauf abgelegten Blech 4 von der Beladeposition unterhalb des Lagerregals 13 in Richtung der x-Achse in die Position gemäß Figur 1. Von dort aus wird der beladene Werkstückwechsler 8/1 mit dem zu bearbeitenden Blech 4 in y-Richtung in den Arbeitsbereich der ersten Bearbeitungsmaschine 3/1 verfahren. Das auf dem Werkstückwechsler 8/1 abgelegte Blech wird anschließend bearbeitet. Bearbeitungsabfall wird an der Bearbeitungsmaschine 3/1 entsorgt. Diese Entsorgung ist in Figur 1 durch einen Pfeil 32 angedeutet. Das bei der Bearbeitung erstellte Fertigteil verbleibt auf dem Werkstückwechsler 8/1. Dieser wird gemeinsam mit dem darauf abgelegten Fertigteil in seine Entladeposition verfahren, die mit der vorstehend beschriebenen Beladeposition übereinstimmt.

Die erste Beschickungseinheit 5 entnimmt nach dem Einlagern der mit dem Rest der zu bearbeitenden Bleche 4 beladenen Palette 30 eine leere oder eine bereits mit Fertigteilen beladene Palette 30 aus einem der Lagerregale 11, 12, 13. Für die Beschickungseinheit 5 zugänglich sind insbesondere auch Paletten 30 in dem Lagerregal 11.

Während der Werkstückbearbeitung mittels der ersten Bearbeitungsmaschine 3/1 verfährt die erste Beschickungseinheit 5 mit der leeren oder mit Fertigteilen beladenen Paletten 30 in eine Position, in welcher die von der ersten Beschickungseinheit 5 aufgenommene Fertigteil-Palette 30 mit dem Fertigteil beladen werden kann, welches auf dem in der Entladeposition befindlichen Werkstückwechsler 8/1 abgelegt ist. Nach der Übergabe dieses Fertigteiles lässt sich die mit einem oder mehreren Fertigteilen beladene Palette 30 mittels der ersten Beschickungseinheit 5 in eines der Lagerregale 11, 12, 13 der ersten Lagereinheit 9 einlagern.

Alternativ kann die erste Beschickungseinheit 5 die mit Fertigteilen beladene Palette 30 an die obere Transfereinheit 22 oder an die untere Transfereinheit 23 der Transfereinrichtung 24 übergeben. Zu diesem Zweck ist die erste Beschickungseinheit 5 in vertikaler Richtung in eine entsprechende Übergabeposition zu verfahren. Nach der Übernahme der mit einem oder mehreren Fertigteilen beladenen Palette 30 verfährt die obere Transfereinheit 22 oder die untere Transfereinheit 23 in horizontaler Richtung in ein Übergabeposition oberhalb oder unterhalb des Lagerregales 15 der zweiten Lagereinheit 10. Von dort übernimmt die zweite Beschickungseinheit 6 die mit wenigstens einem Fertigteil beladene Palette 30. Anschließend verfährt die zweite Beschickungseinheit 6 mit der von ihr übernommenen Palette 30 auf Höhe desjenigen Palettenlagerplatzes des Lagerregales 15, welcher dem Werkstückausgang 19 des Werkstücklagers 2 in Richtung des Materialflusses unmittelbar vorgelagert ist. Von diesem Palettenlagerplatz aus wird schließlich die mit einem oder mehreren Fertigteilen beladene Palette 30 aus dem Werkstücklager 2 ausgeschleust (Figur 1).

Abweichend von den vorstehend beschriebenen Abläufen kann die mit zu bearbeitenden Werkstücken beladene Palette 30 nach der Übernahme von dem unmittelbar auf den Wareneingang 18 folgenden Palettenlagerplatz durch entsprechende vertikale Verfahrbewegung der ersten Beschickungseinheit 5 auf Höhe der oberen Transfereinheit 22 oder der unteren Transfereinheit 23 der Transfereinrichtung 24 bewegt werden. Anschließend wird die mit den zu bearbeitenden Werkstücken beladene Palette 30 an die obere Transfereinheit 22 bzw. an die untere Transfereinheit 23 übergeben. Die obere Transfereinheit 22 bzw. die untere Transfereinheit 23 verfährt dann mit der Palette 30 und den darauf abgelegten Werkstücken in horizontaler Richtung, bis sie oberhalb bzw. unterhalb des Lagerregales 15 der zweiten Lagereinheit 10 angeordnet ist. Von dort aus wird die mit den zu bearbeitenden Werkstücken beladene Palette 30 von der zweiten Beschickungseinheit 6 übernommen. Mittels der zweiten Beschickungseinheit 6 wird die Palette 30 dann mit sämtlichen darauf abgelegten Werkstücken in eines der Lagerregale 14, 15, 16 der zweiten Lagereinheit 10 eingelagert. Alternativ besteht die Möglichkeit, eines der zu bearbeitenden Bleche 4 in der vorstehend beschriebenen Weise an den Werkstückwechsler 8/2 zu übergeben und unter entsprechender Verfahrbewegung des Werkstückwechslers 8/2 in den Arbeitsbereich der Bearbeitungsmaschine 3/2 zu transportieren, wo dann die Werkstückbearbeitung erfolgt.

Nach der Abnahme des zu bearbeitenden Bleches 4 lagert die zweite Beschickungseinheit 6 die Palette 30 mit dem Rest der zu bearbeitenden Werkstücke in eines der Lagerregale 14, 15, 16 der zweiten Lagereinheit 10 ein. Anschließend übernimmt die zweite Beschickungseinheit 6 eine leere oder bereits mit Fertigteilen beladene Paletten 30 aus einem der Lagerregale 14, 15, 16 der zweiten Lagereinheit 10. Auf dieser Palette 30 wird dann in der vorstehend beschriebenen Weise das an der zweiten Bearbeitungsmaschine 3/2 erstellte Fertigteil abgelegt. Anschließend transportiert die zweite Beschickungseinheit 6 die mit wenigstens einem Fertigteil beladene Palette 30 zu demjenigen Palettenlagerplatz des Lagerregales 15, welcher dem Werkstückausgang 19 unmittelbar vorgelagert ist. Über den Werkstückausgang 19 wird die mit dem oder den Fertigteilen beladene Palette 30 schließlich aus dem Werkstücklager 2 abgeführt.

Während die obere Transfereinheit 22 bzw. die untere Transfereinheit 23 mit der Fertigteil-Palette 30 bzw. mit der mit zu bearbeitenden Blechen 4 beladenen Palette 30 zu der zweiten Beschickungseinheit 6 verfährt, kann die erste Beschickungseinheit 5 bereits die nächste Palette 30 mit noch zu bearbeitenden Blechen 4 an dem Werkstückeingang 18 aufnehmen. Da die erste Transfereinheit 22 sowie die zweite Transfereinheit 23 außerhalb des Bewegungsbereiches der Beschickungseinheiten 5, 6 verfahren, lassen sich die Transfereinheiten 22, 23 einerseits und die Beschickungseinheiten 5, 6 andererseits unabhängig voneinander betreiben, ohne dass Kollisionen zu befürchten wären.

Die vorstehend beschriebenen Abläufe sind lediglich beispielhafter Natur. Abwandlungen des dargestellten Materialflusses sind denkbar. Ziel ist eine Optimierung des an der maschinellen Anlage 1 erzielbaren Werkstückdurchsatzes.

In Betracht kommt insbesondere auch ein Transfer von an einer der Bearbeitungsmaschinen 3/1, 3/2 bearbeiteten Werkstücken zu der jeweils anderen Bearbeitungsmaschine 3/1, 3/2, an welcher dann eine zweite Werkstückbearbeitung bzw. eine Nachbearbeitung des Werkstückes vorgenommen wird. Zu diesem Zweck wird das erstbearbeitete Blech 4 von dem betreffenden Werkstückwechsler 8/1, 8/2 auf eine Palette 30 an derjenigen Beschickungseinheit 5, 6 übergeben, welche der für die Erstbearbeitung genutzten Bearbeitungsmaschine 3/1, 3/2 zugeordnet ist. Von der Beschickungseinheit 5, 6 übernimmt eine der Transfereinheiten 22, 23 der Transfereinrichtung 24 die mit dem erstbearbeiteten Blech 4 beladene Palette 30. Von der betreffenden Transfereinheit 22, 23 der Transfereinrichtung 24 aus wird die Palette 30 mit dem erstbearbeiteten Blech 4 anschließend zur Zweitbearbeitung an die hierfür vorgesehene Bearbeitungsmaschine 3/1, 3/2 verbracht. Das endbearbeitete Werkstück wird schließlich in der vorstehend beschriebenen Art und Weise zu dem Werkstückausgang 19 des Werkstücklagers 2 transportiert und von dort aus dem Werkstücklager 2 abgeführt.

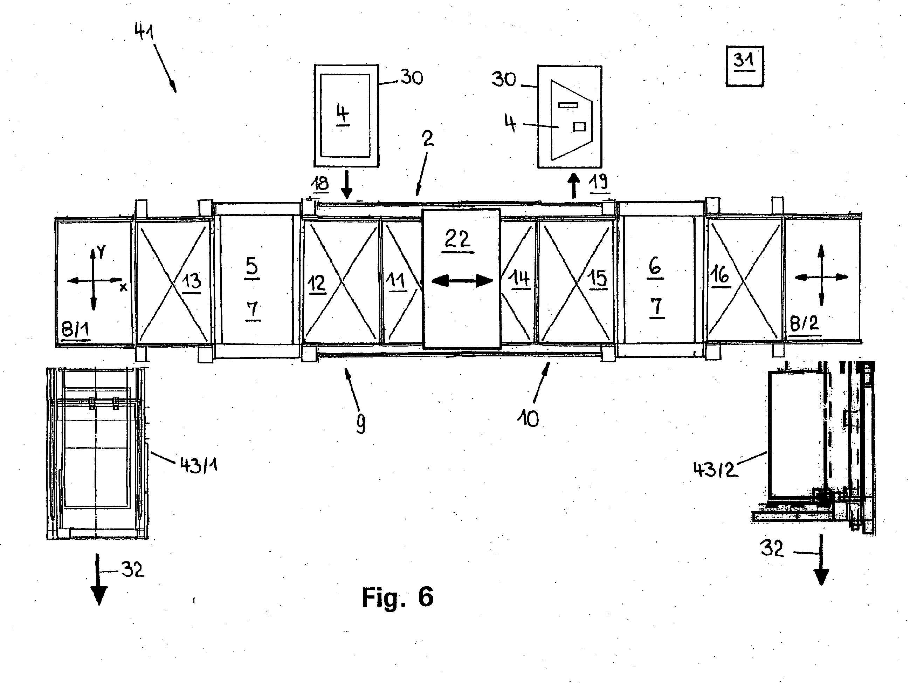

Während die maschinelle Anlage 1 gemäß den Figuren 1 bis 5 über Bearbeitungsmaschinen 3/1, 3/2 verfügt, mittels derer ein und dieselbe Bearbeitungsart realisierbar ist, weist eine maschinelle Anlage 41, wie sie in Figur 6 dargestellt ist, Bearbeitungsmaschinen 43/1, 43/2 für verschiedenartige Materialbearbeitungen auf.

Bei der Bearbeitungsmaschine 43/1 handelt es sich um eine Laserflachbettmaschine zur schneidenden Blechbearbeitung; als zweite Bearbeitungsmaschine 43/2 ist gemäß Figur 6 eine Kombimaschine mit Stanzstation und Laserschneidstation vorgesehen. Die maschinelle Anlage 41 dient in besonderem Maße zur Durchführung von Werkstückbearbeitungen, im Rahmen derer sich an eine erste, vorzugsweise mit der Bearbeitungsmaschine 43/2 durchgeführte Bearbeitung eine zweite Bearbeitung, vorzugsweise durch die Bearbeitungsmaschine 43/1, anschließt. Mittels der Transfereinrichtung 24 wird dabei in der vorstehend beschriebenen Weise der Werkstücktransfer zwischen den Bearbeitungsmaschinen 43/1, 43/2 durchgeführt.

## Patentansprüche

1. Maschinelle Anlage zum Bearbeiten von Werkstücken, insbesondere von Blechen,
• mit einer Lagerseite, die ein Werkstücklager (2) mit einer Mehrzahl von Lagereinheiten (9, 10) umfasst,
• mit einer Bearbeitungsseite, die eine Mehrzahl von maschinellen Bearbeitungseinheiten (3/1, 3/2; 43/1, 43/2) aufweist sowie
• mit einer maschinellen Beschickungseinrichtung (7), die zwischen der Lagerseite und der Bearbeitungsseite vorgesehen ist und die eine Mehrzahl von Beschickungseinheiten (5, 6) umfasst, mittels derer Werkstücke lagerseitig aufnehmbar und bearbeitungsseitig abgebbar und/oder bearbeitungsseitig aufnehmbar und lagerseitig abgebbar sind,
• wobei Anlagenmodule ausgebildet sind, von denen jedes zumindest eine Lagereinheit (9, 10) des Werkstücklagers (2), zumindest eine Bearbeitungseinheit (3/1, 3/1; 43/1, 43/2) der Bearbeitungsseite und dazwischen zumindest eine Beschickungseinheit (5, 6) der Beschickungseinrichtung (7) umfasst, wobei die zumindest eine Lagereinheit (9, 10), die zumindest eine Bearbeitungseinheit (3/1, 3/2; 43/1, 43/2) und die zumindest eine Beschickungseinheit (5, 6) eines Anlagenmoduls einander zugeordnet sind,
**dadurch gekennzeichnet,**
• **dass** mittels der zumindest einen zwischen der zumindest einen Lagereinheit (9, 10) und der zumindest einen Bearbeitungseinheit (3/1, 3/2; 43/1, 43/2) eines Anlagenmoduls vorgesehenen Beschickungseinheit (5, 6) Werkstücke aus der zumindest einen Lagereinheit (9, 10) des betreffenden Anlagenmoduls aufnehmbar und bearbeitungsseitig zu der oder den Bearbeitungseinheiten (3/1, 3/2; 43/1, 43/2) des betreffenden Anlagenmoduls hin abgebbar und/oder bearbeitungsseitig von der oder den Bearbeitungseinheiten (3/1, 3/2; 43/1, 43/2) des betreffenden Anlagenmoduls her aufnehmbar und an die zumindest eine Lagereinheit (9, 10) des betreffenden Anlagenmoduls abgebbar sind,
• **dass** zwischen Beschickungseinheiten (5, 6) unterschiedlicher Anlagenmodule und/oder zwischen Lagereinheiten (9, 10) unterschiedlicher Anlagenmodule eine Transfereinrichtung (24) vorgesehen ist, mittels derer Werkstücke an die Beschickungseinheiten (5, 6) der unterschiedlichen Anlagenmodule und/oder an die Lagereinheiten (9, 10) der unterschiedlichen Anlagenmodule abgegeben werden und/oder mittels derer Werkstücke von den Beschickungseinheiten (5, 6) der unterschiedlichen Anlagenmodule und/oder von den Lagereinheiten (9, 10) der unterschiedlichen Anlagenmodule aufgenommen werden und
• **dass** die Transfereinrichtung (24) innerhalb der Grundfläche des Werkstücklagers (2) vorgesehen ist.

2. Maschinelle Anlage nach Anspruch 1, **dadurch gekennzeichnet, dass** mittels der Transfereinrichtung (24) Werkstücke zwischen unterschiedlichen Bearbeitungseinheiten (3/1, 3/2; 43/1, 43/2) zugeordneten Beschickungseinheiten (5, 6) und/oder zwischen unterschiedlichen Bearbeitungseinheiten (3/1, 3/2; 43/1, 43/2) zugeordneten Lagereinheiten (9, 10) transferierbar sind.

3. Maschinelle Anlage nach einem der vorhergehenden Ansprüche, **dadurch gekennzeichnet, dass** das Werkstücklager (2) als Regallager, gegebenenfalls mit Lagereinheiten (9, 10) in Form von Regaleinheiten, ausgebildet ist.

4. Maschinelle Anlage nach einem der vorhergehenden Ansprüche, **dadurch gekennzeichnet, dass** als Beschickungseinheiten (5, 6) Regalbediengeräte vorgesehen sind.

5. Maschinelle Anlage nach einem der vorhergehenden Ansprüche, **dadurch gekennzeichnet, dass** die Transfereinrichtung (24) wenigstens eine Transfereinheit (22, 23) umfasst, die zwischen unterschiedlichen Bearbeitungseinheiten (3/1, 3/2; 43/1, 43/2) zugeordneten Beschickungseinheiten (5, 6), gegebenenfalls Regalbediengeräten und/oder zwischen unterschiedlichen Bearbeitungseinheiten (3/1, 3/2; 43/1, 43/2) zugeordneten Lagereinheiten (9, 10), gegebenenfalls Regaleinheiten, mit einer Transferbewegung bewegbar ist.

6. Maschinelle Anlage nach Anspruch 5, **dadurch gekennzeichnet, dass** wenigstens eine Transfereinheit (22, 23) bei der Transferbewegung an dem Werkstücklager (2), gegebenenfalls an dem Regallager, bewegbar geführt ist.

7. Maschinelle Anlage nach einem der vorhergehenden Ansprüche, da-durch gekennzeichnet, dass das Werkstücklager (2) als Palettenlager ausgebildet ist.

## Claims

1. Mechanical installation for processing workpieces, in particular metal sheets,
• having a storage side which comprises a workpiece store (2) having a plurality of storage units (9, 10),
• having a processing side which has a plurality of mechanical processing units (3/1, 3/2; 43/1, 43/2) and
• having a mechanical feeding device (7) which is provided between the storage side and the processing side and which comprises a plurality of feeding units (5, 6) by means of which workpieces can be received at the storage side and discharged at the processing side and/or can be received at the processing side and discharged at the storage side,
• there being formed installation modules, each of which comprises at least one storage unit (9, 10) of the workpiece store (2), at least one processing unit (3/1, 3/2; 43/1, 43/2) of the processing side and therebetween at least one feeding unit (5, 6) of the feeding device (7), the at least one storage unit (9, 10), the at least one processing unit (3/1, 3/2; 43/1, 43/2) and the at least one feeding unit (5, 6) of an installation module being associated with each other,
**characterised in that**,
• by means of the at least one feeding unit (5, 6) which is provided between the at least one storage unit (9, 10) and the at least one processing unit (3/1, 3/2; 43/1, 43/2) of an installation module, workpieces can be received from the at least one storage unit (9, 10) of the respective installation module and can be discharged at the processing side towards the processing unit(s) (3/1, 3/2; 43/1, 43/2) of the respective installation module and/or can be received at the processing side from the processing unit(s) (3/1, 3/2; 43/1, 43/2) of the respective installation module and can be discharged to the at least one storage unit (9, 10) of the respective installation module,
• **in that**, between feeding units (5, 6) of different installation modules and/or between storage units (9, 10) of different installation modules, there is provided a transfer device (24) by means of which workpieces are discharged to the feeding units (5, 6) of the different installation modules and/or to the storage units (9, 10) of the different installation modules and/or by means of which workpieces are received from the feeding units (5, 6) of the different installation modules and/or from the storage units (9, 10) of the different installation modules and
• **in that** the transfer device (24) is provided inside the floorspace of the workpiece store (2).

2. Mechanical installation according to claim 1, **characterised in that**, by means of the transfer device (24), workpieces can be transferred between feeding units (5, 6) associated with different processing units (3/1, 3/2; 43/1, 43/2) and/or between storage units (9, 10) associated with different processing units (3/1, 3/2; 43/1, 43/2).

3. Mechanical installation according to either of the preceding claims, **characterised in that** the workpiece store (2) is constructed as a shelf store, optionally having storage units (9, 10) in the form of shelf units.

4. Mechanical installation according to any one of the preceding claims, **characterised in that** storage and retrieval machines are provided as feeding units (5, 6).

5. Mechanical installation according to any one of the preceding claims, **characterised in that** the transfer device (24) comprises at least one transfer unit (22, 23) which can be moved with a transfer movement between different feeding units (5, 6), optionally storage and retrieval machines, which are associated with different processing units (3/1, 3/2; 43/1, 43/2) and/or between storage units (9, 10), optionally shelf units, associated with different processing units (3/1, 3/2; 43/1, 43/2).

6. Mechanical installation according to claim 5, **characterised in that** at least one transfer unit (22, 23) is movably guided during the transfer movement on the workpiece store (2), optionally on the shelf store.

7. Mechanical installation according to any one of the preceding claims, **characterised in that** the workpiece store (2) is constructed as a pallet store.

## Revendications

1. Installation mécanique pour l'usinage de pièces, en particulier de tôles,
- avec un côté d'entreposage, qui comprend un magasin de pièces (2) doté d'une pluralité d'unités d'entreposage (9, 10),
- avec un côté d'usinage, qui présente une pluralité d'unités d'usinage mécaniques (3/1, 3/2 ; 43/1, 43/2),
- et avec un dispositif de chargement mécanique (7), qui est prévu entre le côté d'entreposage et le côté d'usinage et qui comprend une pluralité d'unités de chargement (5, 6), au moyen desquelles des pièces peuvent être prises en charge sur le côté d'entreposage et délivrées au côté d'usinage, et/ou prises en charge sur le côté d'usinage et délivrées au côté d'entreposage,
- sachant que des modules d'installation sont formés, qui comprennent chacun au moins une unité d'entreposage (9, 10) du magasin de pièces (2), au moins une unité d'usinage (3/1, 3/2 ; 43/1, 43/2) du côté d'usinage et, entre ces unités, au moins une unité de chargement (5, 6) du dispositif de chargement (7), sachant que l'unité d'entreposage au moins unique (9, 10), l'unité d'usinage au moins unique (3/1, 3/2 ; 43/1, 43/2) et l'unité de chargement au moins unique (5, 6) d'un module d'installation sont mutuellement associées,
**caractérisée**
- **en ce que**, au moyen de l'unité de chargement au moins unique (5, 6) prévue entre l'unité d'entreposage au moins unique (9, 10) et l'unité d'usinage au moins unique (3/1, 3/2 ; 43/1, 43/2) d'un module d'installation, des pièces peuvent être prise en charge à partir de l'unité d'entreposage au moins unique (9, 10) du module d'installation concerné et délivrées au côté d'usinage à l'unité ou aux unités d'usinage (3/1, 3/2 ; 43/1, 43/2) du module d'installation concerné, et/ou prises en charge au côté d'usinage à partir de l'unité ou des unités d'usinage (3/1, 3/2 ; 43/1, 43/2) du module d'installation concerné et délivrées à l'unité d'entreposage au moins unique (9, 10) du module d'installation concerné,
- **en ce qu'**un dispositif de transfert (24) est prévu entre des unités de chargement (5, 6) de différents modules d'installation et/ou entre des unités d'entreposage (9, 10) de différents modules d'installation, dispositif au moyen duquel des pièces sont délivrées aux unités de chargement (5, 6) des différents modules d'installation et/ou aux unités d'entreposage (9, 10) des différents modules d'installation, et/ou au moyen duquel des pièces sont prises en charge à partir des unités de chargement (5, 6) des différents modules d'installation et/ou à partir des unités d'entreposage (9, 10) des différents modules d'installation,
- et **en ce que** le dispositif de transfert (24) est prévu à l'intérieur de la surface de base du magasin de pièces (2).

2. Installation mécanique selon la revendication 1, **caractérisée en ce qu'**au moyen du dispositif de transfert (24), des pièces peuvent être transférées entre des unités de chargement (5, 6) associées à différentes unités d'usinage (3/1, 3/2 ; 43/1, 43/2) et/ou entre des unités d'entreposage (9, 10) associées à différentes unités d'usinage (3/1, 3/2 ; 43/1, 43/2).

3. Installation mécanique selon l'une des revendications précédentes, **caractérisée en ce que** le magasin de pièces (2) est réalisé sous forme de magasin à rayonnages, le cas échéant avec des unités d'entreposage (9, 10) sous la forme d'unités de rayonnage.

4. Installation mécanique selon l'une des revendications précédentes, **caractérisée en ce que** des transstockeurs sont prévus comme unités de chargement (5, 6).

5. Installation mécanique selon l'une des revendications précédentes, **caractérisée en ce que** le dispositif de transfert (24) comprend au moins une unité de transfert (22, 23) qui peut être déplacée par un mouvement de transfert entre des unités de chargement (5, 6), le cas échéant des transstockeurs, associé(e)s à différentes unités d'usinage (3/1, 3/2 ; 43/1, 43/2), et/ou entre des unités d'entreposage (9, 10), le cas échéant des unités de rayonnage, associées à différentes unités d'usinage (3/1, 3/2 ; 43/1, 43/2).

6. Installation mécanique selon la revendication 5, **caractérisée en ce qu'**au moins une unité de transfert (22, 23) est, lors du mouvement de transfert, guidée en déplacement sur le magasin de pièces (2), le cas échéant sur le magasin à rayonnages.

7. Installation mécanique selon l'une des revendications précédentes, **caractérisée en ce que** le magasin de pièces (2) est réalisé sous forme de magasin pour palettes.
